# EUROPEAN PATENT SPECIFICATION

(11) **EP 3 907 418 B1**
(45) Date of publication and mention of the grant of the patent: **12.07.2023**
(21) Application number: 20172769.0
(22) Date of filing: 04.05.2020
(51) Int. Cl.: F16F 9/14

(54) **A DASHPOT FOR DAMPING A CLOSING MOVEMENT OF A HINGED CLOSURE MEMBER**
SCHLIESSDÄMPFER ZUR DÄMPFUNG EINER SCHLIESSBEWEGUNG EINES SCHARNIERVERSCHLUSSSYSTEMS
AMORTISSEUR DU MOUVEMENT DE FERMETURE D'UN ÉLÉMENT DE FERMETURE À CHARNIÈRE

(43) Date of publication of application: 10.11.2021
(73) Proprietor: Locinox, 8790 Waregem (BE)
(72) Inventor: TALPE, Joseph, 8551 Heestert-Zwevegem (BE)
(74) Representative: Gevers Patents

(56) References cited:
- EP-A1- 3 067 499
- WO-A1-2010/054867
- WO-A1-2018/228729
- US-A- 4 148 111

## Description

The present invention relates to a dashpot for damping a closing movement of a closure system having a support and a closure member that are hingedly connected to each other.

The dashpot comprises a cylinder barrel having a longitudinal direction and a closed cylinder cavity which is formed within the cylinder barrel and which is filled with a volume of hydraulic fluid. The cylinder barrel is made of a polymeric material and the cylinder cavity is formed partially by a cylindrical wall portion of the cylinder barrel. The dashpot further comprises a piston within said cylinder barrel so as to divide the closed cylinder cavity into a high pressure compartment and a low pressure compartment, the piston being slideable with respect to the cylinder barrel between two extreme positions in said longitudinal direction, the cylindrical wall portion having an inner sliding area along which the piston slides when moving between its two extreme positions. A damper shaft is rotatably mounted on the cylinder barrel and is operatively coupled to the piston. The dashpot additionally comprises a motion converting mechanism for converting a rotational motion of the damper shaft in a sliding motion of the piston and a one-way valve allowing fluid flow from the low pressure compartment to the high pressure compartment when said closure member is being opened. Moreover, a clearance is formed between said sliding area and a circumferential part of the piston.

The dashpot may be included in a hinge or may be part of an actuator which comprises a spring for automatically closing the closure system after the closure member has been opened.

A dashpot having the above described features is disclosed in EP 1 094 185. The dashpot is used in a barrel hinge having two hinge members that are pivotably mounted to one another. The first hinge member is provided with a hollow in which a plastic cylinder barrel is removably mounted. The cylinder barrel is prevented from rotating with respect to the remainder of the first hinge member by one or more grooves in the wall of the hollow into which corresponding ribs on the outside wall of the cylinder barrel are fitted. In a similar fashion, the top part of the damper shaft is prevented from rotating with respect to the second hinge member. The piston is also prevented from rotating with respect to the cylinder barrel by using a similar principle, namely by providing one or more grooves in the inner wall of the cylinder barrel and one or more corresponding ribs on the outer surface of the piston. As both hinge members are rotatable with respect to one another, the damper shaft is rotatable with respect to the cylinder barrel and with respect to the piston. Such a rotational motion of the damper shaft is transformed into a sliding motion of the piston by the use of two complementary screw threads disposed on the inner surface of the piston and the outer surface of the damper shaft. The one-way valve present in the piston allows hydraulic fluid flow when opening the closure member. However, when closing the closure member, the one-way valve is closed such that hydraulic fluid has to flow along the piston in the clearance formed between the piston and the damper shaft and in the clearance formed between the piston and the cylinder barrel wall. In other words, the clearance around the piston acts as a restricted fluid passage to damp the closing movement.

A downside of the known dashpot is that the damping is subject to environmental influences. Temperature changes will affect the viscosity of the hydraulic fluid in such a way that the damping force increases as temperature increases. This is a particular problem for outdoor applications where the hinge may be subject to large temperature variations. For example, summer temperatures up to 70°C when the hinge is exposed to sunlight and winter temperatures below -30°C are not uncommon, i.e. temperature variations up to and possibly even exceeding 100°C are possible.

The effect of temperature on the viscosity of oil and oil-based fluids such as hydraulic fluids is known. Typically, subjecting a hydraulic fluid to a decrease in temperature results in an increase in its viscosity. In the context of door closer operation, this means that if a closer and its fluid are subjected to a reduction in operating temperature, movement of the piston will become more difficult, and hence, slower, reflecting the heightened resistance of the fluid to flow. In the extreme case, the door closer might not work at all. At the other extreme, increased working temperature might cause sufficient thinning of the fluid to reduce or eliminate the damping effect of the door closer. The closer may then close so abruptly as to result in damage to the door, door frame, or the door closer itself.

There are no means provided in the known damper in order to overcome these temperature variation effects. Moreover, the closing speed of the dashpot cannot be adjusted as the cross sectional area of the clearance around the piston is not adjustable. Furthermore, the cross sectional area of the clearance around the piston will not vary much with temperature as the cylinder barrel, the piston and the damper shaft are all made of polymeric materials and thus have a similar temperature expansion behaviour.

A solution to this problem has been proposed in EP 3 067 499 which discloses a dashpot used in an actuator that is separately attached to the closure system. The dashpot has a cylinder barrel and a piston. A first restricted fluid passage connecting the high pressure compartment with the low pressure compartment is formed in the cylinder barrel. This first restricted fluid passage comprises an adjustable valve for adjusting the cross sectional area thereof, i.e. for adjusting the closing speed of the closure member. A second restricted fluid passage is formed between the piston and the cylinder barrel. The piston has a somewhat smaller outer diameter than the inner diameter of the cylinder barrel so that there is a clearance between the piston and the cylinder barrel. This clearance forms the second restricted fluid passage between the high pressure compartment and the low pressure compartment of the cylinder cavity. The cylinder barrel is made of aluminium and the piston is made of polyoxymethylene which has a higher thermal expansion coefficient than aluminium. The difference in thermal expansion causes the cross sectional area of the clearance between the piston and the cylinder barrel (i.e. of the second restricted fluid passage) to decrease with increasing temperature and vice versa. This automatic temperature variation of the clearance between the piston and the cylinder barrel compensates for the viscosity changes in the hydraulic fluid, while not affecting hydraulic fluid flow through the first restricted fluid passage that is used to manually adjust the closing speed of the dashpot. In other words, the temperature compensation system ensures a substantially constant closing speed within a certain range of temperatures.

Another solution to this problem has also been disclosed in US 4 148 111. The dashpot disclosed therein comprises a fluid passage between the first and the second side of the cylinder cavity. In particular, the fluid passage is formed in the metal housing of the dashpot, which housing also contains the closed cylinder cavity. The flow of fluid through this fluid passage is restricted by means of an adjustable needle valve. This needle valve comprises a needle provided with a screw thread having a small pitch. By rotating the needle, the gap between the tip of the needle and the valve seat can be adjusted to control the closing speed of the hinged member. In order to compensate for temperature variations and the resulting variations of the viscosity of the hydraulic fluid, the needle of the needle valve is made of a material, in particular a polymeric material, which has a higher thermal expansion coefficient than the material of the cylinder barrel. In this way, a change in ambient temperature automatically causes the gap between the tip of the needle valve and the valve seat to increase or decrease.

A drawback of the dashpots disclosed in EP 3 067 499 and US 4 148 111 is that they are quite expensive since the cylinder barrel/housing has to be made of metal in order to be able to obtain the temperature compensation mechanism.

An object of the present invention is to provide a dashpot wherein a substantial amount of polymeric material can be applied for the production of the cylinder barrel while being operative over a wider range of temperatures than the dashpot disclosed in EP 1 094 185.

To this end, the dashpot according to the present invention is characterised in that the clearance between the piston and the cylinder barrel is sealed by means of at least one elastic seal provided around said circumferential part of the piston. Furthermore, the dashpot according to the present invention comprises at least one restricted fluid passage between the high pressure compartment and the low pressure compartment which passage is formed by a valve seat and a valve member, in particular an elongated valve member, separated by, at a predetermined temperature, a predetermined cross sectional area which determines a closing speed of the closure member; and a temperature compensation system comprising a first part which forms the valve seat and the valve member, the first part being made of a first material having a first thermal expansion coefficient and the valve member being made of a second material having a second thermal expansion coefficient, the second thermal expansion coefficient being larger than the first thermal expansion coefficient so that said predetermined cross sectional area is decreased when said temperature is raised and vice versa so that said predetermined narrowest cross sectional area is increased when said temperature is lowered.

The present inventor has found that, when the cylinder barrel is made from a polymeric material, the cross-sectional area variation of the clearance between the piston and the cylinder barrel, which variation is used as a temperature compensation mechanism in the dashpot disclosed in EP 3 067 499, is difficult to control. One issue is that the dimensional stability of the cylinder barrel is decreased when compared to a cylinder barrel made from a metal. Furthermore, as the cylinder barrel is made from a polymeric material, its thermal expansion coefficient is already quite high. In order to have the desired temperature compensation, the piston should be made from a material with an even higher thermal expansion coefficient. Such materials are not common and quite expensive and are moreover not necessarily suitable for an injection moulding process which is typically used to manufacture the piston.

As such, the present inventor has found that the temperature compensation mechanism disclosed in EP 3 067 499 and US 4 148 111 are not suitable for the dashpot disclosed in EP 1 094 185 which has a cylinder barrel made from a polymeric material. The present invention is then based on the realization that, although a clearance is formed between the sliding area of the cylinder barrel and a circumferential part of the piston such that the piston may slide with respect to the cylinder barrel, this clearance should be sealed so as not to form (part of) the restricted fluid passage.

The present inventor further realized that the provision of another restricted fluid passage formed by a valve seat and a valve member and an accompanying temperature compensation mechanism may be provided in another part (e.g. in the damper shaft or the cylinder barrel) of the dashpot. By introducing such a temperature compensation mechanism, a dashpot made partly from polymeric material is obtained which is operative over a larger range of temperatures and is particularly suited for outdoor applications.

In an embodiment of the dashpot according to the present invention, at least a part of the cylinder barrel, in particular said cylindrical wall portion, is made of said glass fibre reinforced polymeric material.

This achieves a better dimensional stability of the cylinder barrel under varying temperatures as the glass fibres increase the strength, in particular the tensile strength, of the polymeric material and also the wear resistance. Moreover, compared to polyoxymethylene, polyamide has a higher chemical stability, in particular a higher light resistance, and is thus more suited for external applications such as the cylinder barrel.

In a preferred embodiment of the dashpot according to the present invention, said inner sliding area is formed by a layer made of metal or a further polymeric material, in particular polyamide and preferably polyamide 12, which is less abrasive than said glass fibre reinforced polymeric material and which is in particular non-abrasive, which further polymeric material layer is preferably free of hard fibres which have in particular a Mohs hardness higher than 4.0.

The present inventor has found that the glass fibre reinforced polymeric material is quite abrasive. In order to reduce the wear and abrasion of the elastic seal as a result of the piston sliding along the sliding area of the cylindrical wall portion of the cylinder barrel, the sliding area is preferably not made of the glass fibre reinforced polymeric material but is instead preferably made of a metal material or a polymeric material which is not abrasive or at least less abrasive than the glass fibre reinforced polymeric material.

In a more preferred embodiment of the dashpot according to the present invention, the further polymeric material of the layer forming said inner sliding surface is overmoulded over said part of the cylinder barrel which is made of said glass fibre reinforced polymeric material. More preferably, the entire cylinder barrel is formed as a two-part structure with one part being made from said glass fibre reinforced polymeric material and with the other part forming the sliding area made from the less abrasive polymeric or metal material.

By moulding the polymeric material of the inner sliding surface of the cylinder barrel over the part of the cylinder barrel which is made of the glass fibre reinforce polymeric material, the inner sliding surface can be easily produced and fits exactly to the remaining part of the cylinder. It is also possible achieve a mechanical anchoring of the inner sliding surface of the cylinder barrel to the remaining part of the cylinder barrel by providing a form-fitting shape on the inner side of this remaining part of the cylinder barrel.

In an embodiment of the dashpot according to the present invention, said damper shaft extends through the piston from said high pressure compartment to said low pressure compartment and said restricted fluid passage is provided in said damper shaft.

Forming the restricted fluid passage in the damper shaft is space efficient as no space needs to be provided in the cylinder barrel. Moreover, since the cylinder barrel is made of polymeric material, it may be difficult to find an economically viable material having an even higher thermal expansion coefficient to have the desired temperature compensation mechanism when the restricted fluid passage would be formed in the cylinder barrel.

In a preferred embodiment of the dashpot according to the present invention, said damper shaft is made of a metal, in particular of an aluminium alloy.

A metal damper shaft is preferred to a damper shaft made of a polymeric material. Whilst the required strength in as compact a damper shaft as possible (i.e. a damper shaft with as small a radius as possible) is achievable using both a metal or a polymeric material, the metal option is often cheaper. Moreover, the restricted fluid passage is then formed in a metal element, which would not be the case when the restricted fluid passage would be formed, for example, in the cylinder barrel wall. A metal structure typically has an improved dimensional stability when compared to a structure made from a polymeric material for economically comparable materials. A metal damper shaft is also advantageous for the temperature compensation mechanism as described below.

In a more preferred embodiment of the dashpot according to the present invention, the valve member is fixed to said damper shaft at a distance from said valve seat. The valve member is preferably a polymeric material, in particular polyethylene or polypropylene, and preferably forms an adjustable valve when combined with the valve seat.

The, in particular elongated, valve member together with the damper shaft act as the temperature compensation mechanism since the elongated valve member reacts more strongly to temperature variations than the metal damper shaft. As such, the narrowest cross-sectional area of the restricted fluid passage, which is now formed by the clearance between the elongated valve member and the valve seat, varies due to temperature changes. Furthermore, the adjustable valve enables to adjust the closing speed of the closure member.

In an embodiment of the dashpot according to the present invention, said hydraulic fluid comprises silicone oil.

An advantage of silicone oil is that its viscosity varies only a little as a function of the temperature.

In an embodiment of the dashpot according to the present invention, at least a part of said piston is made of glass fibre reinforced polyoxymethylene.

Compared to polyamide, polyoxymethylene has the advantage that it absorbs less water. When the hydraulic fluid contains some moisture, which is especially the case when the hydraulic fluid comprises a silicone oil, the use of polyoxymethylene as polymeric material for the piston is to be preferred.

In an embodiment of the dashpot according to the present invention, at least a part of said cylinder barrel is made of glass fibre reinforced polyamide, preferably polyamide 6.

Compared to polyoxymethylene, polyamide has a higher chemical stability, in particular a higher light resistance, and is thus more suited for external applications.

In a preferred embodiment of the dashpot according to the present invention, at least a part of said piston is made of a further glass fibre reinforced polymeric material, preferably of glass fibre reinforced polyoxymethylene.

The presence of glass fibres improves the dimensional stability and the overall strength of the piston. Moreover, by making both the piston and the cylinder barrel at least partly from glass fibre reinforced polymeric material, they have a comparable thermal expansion behaviour thus minimizing the cross-sectional area variation of the clearance sealed by the elastic seal.

It will be readily appreciated that the various embodiments described above, although referred to as "preferred", "more preferred", etc., are to be construed as exemplary manners in which the invention may be implemented rather than as limiting the scope of the invention. Moreover, these various embodiments may be readily combined with one another.

The invention will be further explained by means of the following description and the appended figures. The invention will be further explained by means of the following description and the appended figures.
Figure 1 shows a front side partially cross-sectioned view of a left-handed closure member hinged to a support using a hydraulically damped hinge with a dashpot according to the present invention.
Figures 2A to 2C show longitudinal cross-sections through the hydraulically damped hinge of figure 1.

The present invention will be described with respect to particular embodiments and with reference to certain drawings but the invention is not limited thereto but only by the claims. Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes. The terms so used are interchangeable under appropriate circumstances and the embodiments of the invention described herein can operate in other orientations than described or illustrated herein.

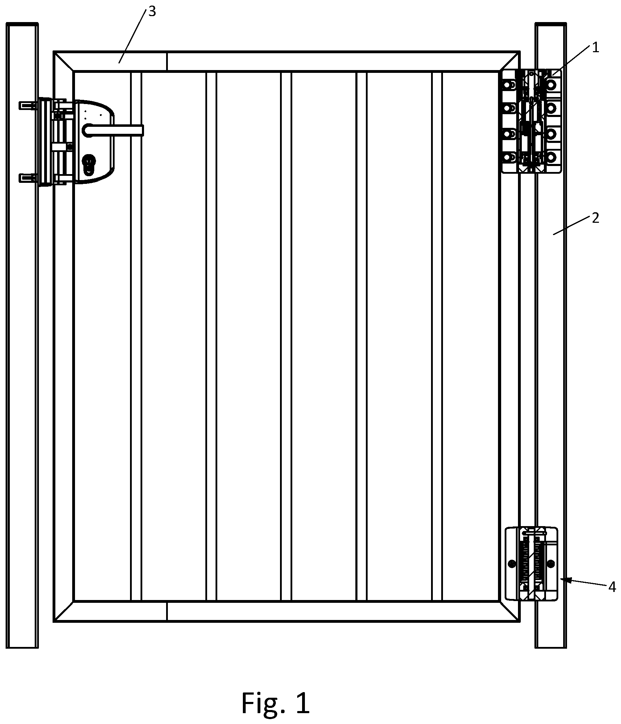

The invention generally relates to a dashpot for damping a closing movement of a closure system having a support and a closure member that are hingedly connected to each other. The dashpot will largely be described by reference to a hydraulically damped hinge as illustrated in figures 1 to 2C, but the dashpot should not be considered to be limited to applications within a hinge. In particular, applications of the dashpot in a hydraulically damped actuator are also within the scope of the invention.

Figures 1 to 2C illustrate a hydraulically damped hinge 1 for hingedly connecting a first member and a second member, the hinge 1 including a dashpot according to the present invention. The first member is typically a fixed support 2, such as a wall or a post, while the second member is typically a moveable closure member 3, such as a gate, a door, or a window.

Typically a second hinge 4 is also used to hingedly connect the closure member 3 to the support 2. In particular, the hinges 1, 4are designed for an outdoors closure system that may be subjected to large temperature variations. In a typical application, it is desired to have the closure member 3 to be self-closing. This may be achieved generally by providing a hinge that comprises an energy storing mechanism and a dashpot both of which are operatively connected with the members of the closure system. The energy storing mechanism is configured for storing energy when the closure system is being opened and for restoring the energy to effect closure of the closure system. The dashpot is configured for damping a closing movement of the closure system and comprises a piston that is slideable along the longitudinal direction within the actuator between two extreme positions. The dashpot and the energy storing mechanism may also be provided in different hinges of the set. For example, as illustrated in figure 1, the energy storing mechanism is provided in the bottom hinge 4, while the dashpot is provided in the top hinge 1.

Figure 1 illustrates a left-handed closure system. The same hinge(s) 1, 4 may be used for both orientations of closure systems as the hinge(s) 1, 4 may be mounted in differently oriented positions depending on the handedness of the closure system. Specifically, for a right-handed closure system, the hinge(s) is/are mounted with its/their longitudinal axis in a first orientation (e.g. upright or upside down), while, for a left-handed closure system, the hinge(s) is/are mounted with its/their longitudinal axis in a second orientation that opposite to the first orientation (e.g. upside down or upright). This enables the energy storing mechanism and the dashpot to operate in the same way for both a right-handed closure system and a left-handed closure system.

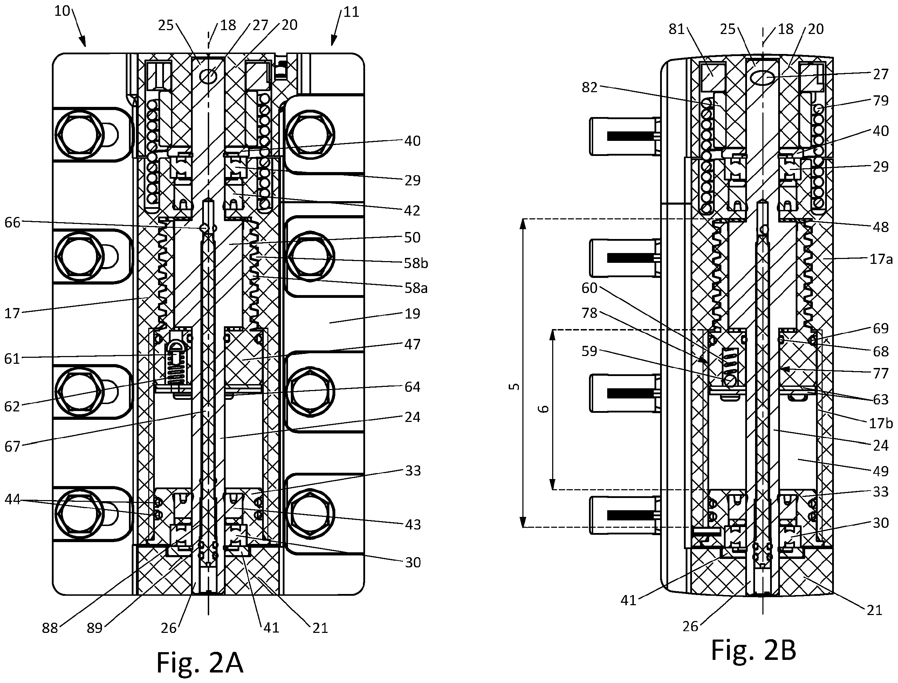

The hydraulically damped hinge 1 will be described in greater detail by reference to figures 2A to 2C. The hinge 1 comprises a first hinge member 10 that is configured to be fixed to the closure member 3 and a second hinge member 11 which is pivotably mounted to the first hinge member 10 and which is configured to be fixed to the support 2. In particular, each hinge member 10, 11 is fixed to the closure system using four fixture sets as described in EP 1 907 712 or in EP 3 575 617. It will be readily appreciated that more or fewer fixture sets may also be used to fix the hinge members 10, 11 to the closure system. Moreover, other fastening means may also be used. Moreover, the hinge members 10, 11 may also be mounted to a different member of the closure system, i.e. the hinge member 10 may be configured to be fixed to the closure member 3 and the hinge member 11 may be configured to be fixed to the support 2.

The hinge 1 is constructed as a flush hinge in the illustrated embodiments. In particular, the first hinge member 10 comprises a leaf and a tubular cylinder barrel 17 having a longitudinal axis 18. The second hinge member 11 comprises a leaf that is connected with a first tubular part 20 and a second tubular part 21. The tubular parts 20, 21 have a shape, in particular a diameter and a longitudinal axis, corresponding to the tubular cylinder barrel 17 and are located on opposing ends of the tubular cylinder barrel 17. More specifically, the cylinder barrel 17 has a first end adjacent which the first tubular part 20 is positioned and a second end adjacent which the second tubular part 21 is positioned. In other words, the cylinder barrel 17 forms a central knuckle of the hinge 1 while the tubular parts 20, 21 each form an outside knuckle of the hinge 1. The mechanical connection between the hinge members 10, 11 is achieved by the use of roller bearings 29, 30 and bearing surfaces formed by thrust washers 40, 41. Further details of the mechanical connection of the hinge members 10, 11 are described in pending European patent applications 20160266.1 and 20160257.0 filed by the Applicant.

The illustrated hinge 1 is provided with a torsion spring 79 that is interposed between the hinge members 10, 11, in particular between the cylinder barrel 17 and the first tubular part 20. The torsion spring 79 has a first extremity (not shown) that is fixed to the first tubular part 20, in particular to an annular fixation member 81 through which a transverse pin 27 is placed. The second extremity (not shown) of the torsion spring 79 is placed in a hole (not shown) in the cylinder barrel 17. Padding 82 is provided to prevent the torsion spring 79 from buckling due to the large forces exerted thereon. This torsion spring 79 may act as the energy storing mechanism to urge the closure member 3 to its closed position.

The hinge 1 comprises a shaft 24 that extends along the length of the tubular cylinder barrel 17 and has a rotation axis that substantially coincides with the longitudinal axis 18 of the cylinder barrel 17. The shaft 24 has a first extremity 25 that is connected to the first tubular part 20, in particular by the transverse pin 27. The shaft 24 also has a second extremity 26 that is positioned in a guiding opening in the second tubular part 21. The shaft 24 transfers the opening and closing movement of the closure system to the dashpot and is therefore also referred to as the damper shaft 24.

The dashpot comprises a closed cylinder cavity formed inside the cylinder barrel 17. More specifically, the cylinder cavity is partially formed by a cylindrical wall portion indicated by reference number 5 in figure 2B. The closed cylinder cavity is closed by various seals at its top and bottom regions (i.e. its end regions). Specifically, at the first end of the cylinder barrel 17 a first annular seal 42 is disposed around the damper shaft 24 and engages the inner wall of the cylinder barrel 17. This annular seal 42 prevents leakage of hydraulic fluid that could occur due to the relative rotation of the damper shaft 24 with respect to the cylinder barrel 17. At the second end of the cylinder barrel, the cylinder cavity is closed by the seal cap 33. A second annular seal 43 is disposed around the damper shaft 24 and engages an inner wall of the seal cap 33. This annular seal 43 prevents leakage of hydraulic fluid that could occur due to the relative rotation of the damper shaft 24 with respect to the seal cap 33. In order for the seal cap 33 to be effectively sealed with respect to the cylinder barrel 17, two sealing rings 44 are provided on an outer wall of the seal cap 33.

The closed cylinder cavity is filled with hydraulic fluid. Preferably the hydraulic fluid comprises silicone oil which is advantageous as its viscosity varies only a little as a function of the temperature.

The dashpot further comprises a piston 47 placed in the closed cylinder cavity to divide the closed cylinder cavity into a high pressure compartment 48 (area above piston seals 68, 69 in figures 2A to 2C) and a low pressure compartment 49 (area below piston seals 68, 69 in figures 2A to 2C). The dashpot further comprises a motion converting mechanism to convert the relative rotation between the cylinder barrel 17 and said damper shaft 24 into a sliding motion of the piston 47 between two extreme positions. During its sliding motion, the piston 47 slides along the cylinder barrel 17, in particular along (part of) the cylindrical wall portion 5. As used herein, the term "sliding area" is meant to include at least the surface area of the inner wall of the cylinder barrel 17 along which the piston 47 is able to slide. The sliding area is denoted with reference number 6 in figure 2B. It will be readily appreciated that the sliding area 6 may also include the area where the cylinder barrel 17 contacts the sealing cap 33.

The motion converting mechanism comprises a locking element 50 that prevents rotation of the piston 47 with respect to the damper shaft 24 and two mutually co-operating screw threads 58a, 58b. Further details of the motion converting mechanism are described in pending European patent applications 20160266.1 and 20160257.0 filed by the Applicant.

The dashpot further comprises a one-way valve 59 (indicated in figure 2B) which allows the hydraulic fluid to flow from the low pressure compartment 49 of the closed cylinder cavity to the high pressure compartment 48 thereof when the closure system is being opened. The opening movement of the closure system is therefore not damped or at least to a smaller extent than the closing movement. This one-way valve 59 is typically provided in the piston 47, in particular in a fluid passage 60 through the piston 47. In the illustrated embodiment, the one-way valve 59 is formed by a spring-biased ball valve.

The piston 47 is also provided with a further one-way valve, namely a safety valve 61 (indicated in figure 2A), which enables flow of hydraulic fluid in the opposite direction (i.e. from the high pressure compartment 48 to the low pressure compartment 49) but only in case the pressure in the high pressure compartment 48 of the cylinder cavity would exceed a predetermined threshold value, for example when an external closing force would be exerted onto the closure member 3 which could damage the hinge 1. In the illustrated embodiment, the one-way valve 61 is formed by a spring-biased ball valve. The spring provided in this safety valve 61 has thus a much larger spring constant than the spring provided in the one-way valve 59 as the safety valve 61 should not be opened under normal operating conditions. This one-way valve 61 is typically provided in the piston 47, in particular in a fluid passage 62 through the piston 47. As shown in figures 2A to 2C, one or more mounting plates 63 are attached to the bottom of the piston 47. These plates 63 may be attached by means of one or more screws 64 that fit into corresponding holes in the piston 47. The mounting plates 63 are used to mount the one-valve valves 59, 61 in the piston 47.

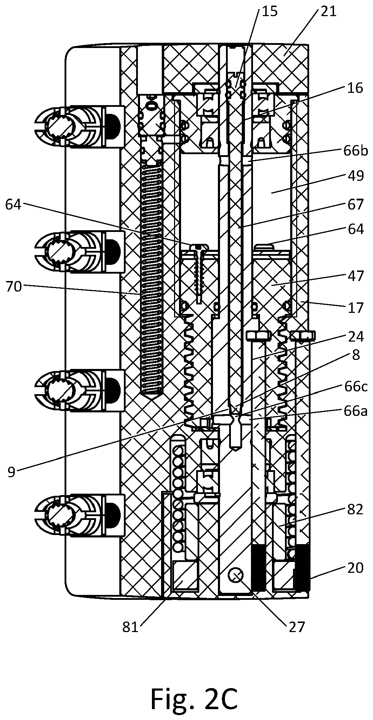

To achieve the damping action upon closing of the closure system, a restricted fluid passage 66 is provided between the compartments 48, 49 of the closed cylinder cavity. The restricted fluid passage 66 is best shown in figure 2C and connects, in all the possible positions of the piston 47, i.e. in all positions between its two extreme positions, the low pressure compartment 49 with the high pressure compartment 48. In the illustrated embodiment, the passage 66 is provided in the damper shaft 24 and is formed by two transverse bores 66a, 66b connected by an axial bore 66c. The minimal cross-section of the passage 66 determines the closing speed of the closure member 3.

In the illustrated embodiment, an adjustable valve member 67, in particular a needle valve member, is placed in the axial bore 66c. The narrowest cross-section within the restricted fluid passage 66 is formed between the top part of the adjustable valve member 67, i.e. the tapered nose section 8, and the bore 66c which forms a valve seat 9 as illustrated in figure 2C. The end 15 of the adjustable valve member 67 opposite the tapered nose section 8 is screwed into the extension of the bore 66c using a threaded portion 16. The top face of the end 15 is accessible from outside the dashpot. As such, the valve member 67 may be rotated when the hinge 1 is mounted, which rotation causes the top of the valve member 67 to move upwards or downwards thereby changing the narrowest cross-section within the restricted fluid passage 66, i.e. adjusting the closing speed of the closure member 3.

It will be readily appreciated that the hinge 1 may also be provided without an adjustable valve member 67 in which case the closing speed of the closure member 3 is fixed. For example, the needle valve member 67 may be wholly fixed within the damper shaft 24 without allowing a rotation to change the narrowest cross-section.

It will also be readily appreciated that the restricted fluid passage 66 may also be formed in a different part of the hinge 1. For example, in a non-illustrated embodiment, the restricted fluid passage is formed by a bore in the cylinder barrel 17 and the, preferably adjustable, valve member is placed in that bore.

The dashpot also comprises two sealing rings 68, 69 to seal the high pressure compartment 48 from the low pressure compartment 49. A first sealing ring 68 is provided on an inner surface of the piston 47 in contact with the damper shaft 24 and a second sealing ring 69 is provided on an outer surface of the piston 47 in contact with the inner wall of the cylinder barrel 17. Providing these sealing rings 68, 69 ensures that the restricted fluid passage 66 is only formed within the damper shaft 24 such that controlling the hydraulic fluid flow is simplified. In other words, the sealing rings 68, 69 ensure that the clearance 78 between the circumferential part of the piston 47 and the sliding area 6 is sealed and that the clearance 77 between the inner area of the piston 47 and the damper shaft 24 is sealed. It will be appreciated that the sealing of the clearance 77 may also be achieved by the mounting plates 63.

The hinge 1 is mainly used outdoors where large temperature variations are not uncommon. For example, summer temperatures up to 70°C when the hinge 1 is exposed to sunlight and winter temperatures below -30°C are not uncommon, i.e. temperature variations up to and possibly even exceeding 100°C are possible. Moreover, there are also daily temperature variations between night and day which can easily exceed 30°C when the hinge 1 is subjected to direct sunshine. These temperature variations cause expansion, and also contraction, of the hydraulic fluid, which could affect the operation of the dashpot. In particular, the expansion due to temperature variations can be up to 1 % of the volume of hydraulic fluid for a temperature variation of 10°C, depending on the expansion coefficient of the hydraulic fluid. As such, an expansion of, for example, up to 3 ml for a temperature difference of 50°C is possible. As described in more detail below, such temperature variations also affect the viscosity of the hydraulic fluid and require a temperature compensation mechanism.

To counter the expansion and contraction of the hydraulic fluid with temperature, a small amount of gas, such as air, could be provided in the hydraulic fluid itself. However, it has been found that this gas may interfere with the good working of the hinge 1, especially when gas bubbles, or an emulsion of the gas in the hydraulic fluid, passes through the restricted fluid passage(s) and provides a smaller damping effect than pure hydraulic fluid. Consequently, the hydraulic fluid is preferably free of gas bubbles. In the hinge 1 illustrated in the drawings, expansion of the hydraulic fluid is countered by means of an expansion channel 70 provided in a bore in the tubular cylinder barrel 17 as illustrated in figure 2C. Further details of the expansion channel are described in pending European patent application 17823166.8 filed by the Applicant.

The hinge members 10, 11 according to the present invention are made from a polymeric material. As the hinge 1 is meant for outdoor use, the hinge members 10, 11 are continuously exposed to the outside environment during their entire lifetime. It is thus preferred to use a glass fibre reinforced polymeric material to manufacture the hinges. Polyamide 6 with 40% glass fibres is a composition that is known for its high rigidity and strength and its suitability for continuous exposure applications. However, it will be readily appreciated that other polyamide materials may be used with a different percentage of glass fibres, e.g. between 20% and 60% and preferably between 30% and 50% by volume of fibres.

A downside of forming the first hinge member 10 from a glass fibre reinforced polymeric material is that the sealing ring 69 on the outside surface of the piston 47 may be damaged by sliding along the wall of the cylinder barrel 17, i.e. along the sliding area 6, in particular due to the glass fibres present in the material from which the cylinder barrel 17 is formed.

In order to prevent damage to the sealing ring 69 on the piston 47, at least the sliding area 6 of the cylinder barrel 17 is made from a different material than the remainder of the cylinder barrel 17. In other words, the cylinder barrel 17 comprises a base 17a (indicated in figure 2B) and an inner cover layer 17b (indicated in figure 2B) that forms at least the sliding area 6. The base 17a is made from a glass fibre reinforced polymeric material, while the inner cover layer 17b is made from a material which does not (or at least not severely) damage the sealing ring 69 on the piston 47. Suitable materials for the inner cover layer 17b are metal or a further polymeric material, in particular polyamide and preferably polyamide 12, which is less abrasive than said glass fibre reinforced polymeric material and which is in particular non-abrasive. The further polymeric material layer is preferably free of hard fibres which have in particular a Mohs hardness higher than 4.0.

In the illustrated embodiment, the cylinder barrel 17 is made by multi-material injection moulding, in particular over-moulding, such that both the base 17a and the inner cover layer 17b may be formed within a single process. In this manufacturing method, it is preferred that the inner cover layer 17b is formed from a polyamide in order to be compatible with the polyamide 6 of the base layer 17a. Preferably, the inner cover layer 17b is made from polyamide 12 as this is more stable in a hygroscopic sense when compared to polyamide 6. Possible hygroscopic instabilities could result in deformation of the inner cover layer 17b which could compromise the seals of both the high pressure compartment and/or the closed cylinder cavity.

In an alternative embodiment, the inner cover layer 17b is formed by a cylindrical insert 17b, e.g. a sleeve, that is inserted into the base 17a.

In the illustrated embodiment, the inner cover layer 17b has an average width that is about 25% of the width of the base 17a in the sealing area 88. In general, the inner cover layer 17b may have an average width up to 50% of the total average width of the cylinder barrel 17 in the sealing area 6, meaning that the cover layer 17b and the base 17a have a same width.

In the illustrated embodiments, the damper shaft 24 is made, preferably extruded, from a metal, preferably aluminium. A metal damper shaft 24 is preferred as it is economically often cheaper to obtain the required strength in a compact damper shaft using metal. Having the damper shaft 24 as compact as possible is beneficial as this leaves more volume to provide hydraulic fluid within a same outside diameter hinge. In other words, the maximal volume of the closed cylinder cavity is increased by reducing the diameter of the damper shaft 24.

As described above, temperature changes will also affect the viscosity of the hydraulic fluid in such a way that the damping force increases as temperature increases. This is a particular problem for outdoor applications where the hinge may be subject to large temperature variations. For example, summer temperatures up to 70°C when the hinge is exposed to sunlight and winter temperatures below -30°C are not uncommon, i.e. temperature variations up to and possibly even exceeding 100°C are possible.

It is thus necessary to include a temperature compensation mechanism in order to counter changes in hydraulic fluid viscosity. This is achieved by the, preferably adjustable, valve member 67 placed in the restricted fluid passage 66. More specifically, the valve member 67 is made from a material having a higher thermal expansion coefficient when compared to the damper shaft 24 in which the restricted fluid passage 66 is formed. Consequently, the valve member 67 expands more than the restricted fluid passage 66 with increasing temperature. In other words, the clearance between the tapered nose section 8 and the valve seat 9 decreases with increasing temperature and vice versa since the other end 15 of the valve member 67 is fixed to the damper shaft 24. As disclosed in EP 3 067 499, this leads to automatically compensating for hydraulic fluid viscosity changes due to temperature variations.

The adjustable valve member 67 may be made from polyethylene or polypropylene as these materials have a high thermal expansion coefficient and are easy to use in an injection moulding process to manufacture the valve member 67. However, other materials may be used which have a higher thermal expansion when compared to the damper shaft 24. It will be readily appreciated that the same temperature compensation mechanism is also obtained with a fixed, i.e. non-adjustable, valve 67.

Since the valve member 67 is fixed at is end 15, the total length of the valve 67 is directly proportional to its temperature expansion. In other words, the longer the valve member 67, the more the tapered nose section 8 will move away from/towards the valve seat 9 with decreasing/increasing temperature. As such, both the material choices of the damper shaft 24 and the valve member 67 and the total length of the valve member 67 may be used to have the desired cross-sectional area variation of the clearance between the valve seat 9 and the tapered nose section 8, which variation counteracts the changing viscosity of the hydraulic fluid.

It will be readily appreciated that any differences in thermal expansion coefficient between the piston 47, the cylinder barrel 17 and the damper shaft 24 are inconsequential as the sealing rings 69, 69 will counteract any difference in expansion.

The piston 47 may be made from a variety of materials, including metals or polymeric materials. Polymeric materials, in particular thermoplastic materials, are preferred as these enable to cost-efficiently fabricate the piston 47 using injection moulding. A preferred thermoplastic material is polyoxymethylene as this has a low friction and is thus less likely to damage the damper shaft 24 and/or the inner cover layer 17b. This material also presents a high resiliency. If desired, the piston 47 may also be made from a glass fibre reinforced polymeric material to improve the overall strength of the piston 47.

The sealing rings 68, 69 may likewise be made from a variety of materials. Polymeric materials, in particular thermoplastic materials such as polyurethane or rubber, are preferred as these enable to cost-efficiently fabricate the sealing rings 68, 69. Specific examples are EPDM rubber, a thermoplastic elastomer and nitrile rubber. The sealing rings 68, 69 and the piston 47 may be made by multi-material injection moulding, in particular over-moulding. In such a case, EPDM rubber or a thermoplastic elastomer are preferred materials for the sealing rings 68, 69.

As already stated above, although the description above and accompanying figures 1 to 2C relate to a hinge, it should be appreciated that the dashpot of the hinge may also be suitable for a dashpot in a hydraulically damped actuator in general, for example the actuators described in WO 2018/228729. Specific reference is made to the composition of the cylinder barrel 17 with a base layer 17a and an inner cover layer 17b to replace the aluminium cylinder barrel of WO 2018/228729 , the sealing rings 68, 69 on the piston 47 to seal the high pressure compartment, the construction of the restricted fluid passage 66 within the damper shaft, and materials of the adjustable valve 67, the damper shaft 24 and the piston 47. Furthermore, these same aspects of the dashpot may also be suitable for a dashpot operating with a non-rotatable damper shaft as disclosed in EP 2 356 304.

Although aspects of the present disclosure have been described with respect to specific embodiments, it will be readily appreciated that these aspects may be implemented in other forms within the scope of the invention as defined by the claims.

## Claims

1. A dashpot for damping a closing movement of a closure system having a support (2) and a closure member (3) that are hingedly connected to each other, the dashpot comprising:
- a cylinder barrel (17) having a longitudinal direction (18), said cylinder barrel being made of a polymeric material;
- a closed cylinder cavity formed within the cylinder barrel and being filled with a volume of hydraulic fluid, the cylinder cavity being formed partially by a cylindrical wall portion (5) of the cylinder barrel;
- a piston (47) within said cylinder barrel so as to divide the closed cylinder cavity into a high pressure compartment (48) and a low pressure compartment (49), the piston being slideable with respect to the cylinder barrel between two extreme positions in said longitudinal direction, the cylindrical wall portion (5) having an inner sliding area (6) along which the piston slides when moving between its two extreme positions;
- a damper shaft (24) which is rotatably mounted on the cylinder barrel and operatively coupled to the piston;
- a motion converting mechanism for converting a rotational motion of the damper shaft in a sliding motion of the piston; and
- a one-way valve (59) allowing fluid flow from the low pressure compartment to the high pressure compartment when said closure member is being opened,
wherein a clearance (78) is formed between said sliding area (6) and a circumferential part of the piston (47),
**characterised in that** said clearance (78) is sealed by means of at least one elastic seal (69) provided around said circumferential part of the piston, and **in that** the dashpot further comprises:
- at least one restricted fluid passage (66) between the high pressure compartment and the low pressure compartment which is formed by a valve seat (9) and a valve member (67) separated by, at a predetermined temperature, a predetermined cross sectional area which determines a closing speed of the closure member; and
- a temperature compensation system comprising a first part which forms the valve seat (9) and the valve member (67), the first part being made of a first material having a first thermal expansion coefficient and the valve member (67) being made of a second material having a second thermal expansion coefficient, the second thermal expansion coefficient being larger than the first thermal expansion coefficient so that said predetermined cross sectional area is decreased when said temperature is raised and vice versa so that said predetermined narrowest cross sectional area is increased when said temperature is lowered.

2. The dashpot according to claim 1, **characterised in that** at least a part (17a) of the cylinder barrel (17), in particular said cylindrical wall portion (5), is made of a glass fibre reinforced polymeric material.

3. The dashpot according to claim 2, **characterised in that** said sliding area (6) is formed by a layer (17b) made of metal or a further polymeric material, the metal and the further polymeric material being less abrasive, in particular non-abrasive, towards said elastic seal (69) than said glass fibre reinforced polymeric material is towards said elastic seal (69).

4. The dashpot according to claim 3, **characterised in that** said further polymeric material comprises polyamide, preferably polyamide 12.

5. The dashpot according to claim 3 or 4, **characterised in that** the further polymeric material is free of hard fibres which have, in particular, a Mohs hardness higher than 4.0.

6. The dashpot according to any one of claims 3 to 5, **characterised in that** the further polymeric material is overmoulded over said part (17a) of the cylinder barrel which is made of said glass fibre reinforced polymeric material.

7. The dashpot according to any one of the preceding claims, **characterised in that** said damper shaft (24) extends through the piston from said high pressure compartment to said low pressure compartment and said restricted fluid passage (66) is provided by a bore in said damper shaft, the valve member (67) being positioned within said bore.

8. The dashpot according to claim 7, **characterised in that** said damper shaft is made of a metal, in particular an aluminium alloy, which is said first material.

9. The dashpot according to claim 7 or 8, **characterised in that** the valve member (67) is fixed to said damper shaft (24) at a distance from said valve seat (9).

10. The dashpot according to claim 9, **characterised in that** said valve member and said valve seat form an adjustable valve.

11. The dashpot according to any one of claims 7 to 10, **characterised in that** a further clearance is formed between the damper shaft (24) and an inner area of the piston (27) which slides along the damper shaft, which further clearance is sealed by means of at least one elastic seal (68) provided on the inner area of the piston.

12. The dashpot according to any one of the preceding claims, **characterised in that** said valve member is made of a polymeric material, in particular polyethylene or polypropylene.

13. The dashpot according to any one of the preceding claims, **characterised in that** the cylinder barrel (17) is made of a polymeric material reinforced by means of glass fibres.

14. The dashpot according to claim 13, **characterized in that** the cylinder barrel (17) is made of a polyamide, preferably polyamide 6, reinforced by means of glass fibres.

15. The dashpot according to any one of the preceding claims, **characterized in that** at least a part of said piston is made of polyoxymethylene, preferably glass fibre reinforced polyoxymethylene.

## Patentansprüche

1. Ein Schließdämpfer zur Dämpfung einer Schließbewegung eines Verschlusssystems mit einer Stütze (2) und einem Schließelement (3), die gelenkig miteinander verbunden sind, wobei der Schließdämpfer Folgendes umfasst:
- einen Zylindermantel (17), der eine Längsrichtung (18) hat, wobei der erwähnte Zylindermantel aus einem Polymermaterial hergestellt ist;
- einen geschlossenen Zylinderhohlraum, geformt im Zylindermantel und gefüllt mit einer Menge von Hydraulikflüssigkeit, wobei der Zylinderhohlraum teilweise durch einen zylindrischen Wandabschnitt (5) des Zylindermantels gebildet ist;
- einen Kolben (47) innerhalb des erwähnten Zylindermantels, um den geschlossenen Zylinderhohlraum in einen Raum mit hohem Druck (48) und einen Raum mit niedrigem Druck (49) zu teilen, wobei der Kolben in Bezug zum Zylindermantel zwischen zwei Endpositionen in der erwähnten Längsrichtung verschiebbar ist, wobei der zylindrische Wandabschnitt (5) einen inneren Gleitbereich (6) hat, an dem der Kolben entlang gleitet, wenn er sich zwischen seinen zwei Endpositionen bewegt;
- eine Dämpferwelle (24), welche drehbar auf dem Zylindermantel montiert ist und operativ mit dem Kolben verbunden ist;
- einen Bewegungsumwandlungsmechanismus zum Umwandeln einer Drehbewegung der Dämpferwelle in eine Gleitbewegung des Kolbens; und
- ein Einwegventil (59), welches die Fluidbewegung vom Raum mit niedrigem Druck zum Raum mit hohem Druck erlaubt, wenn das erwähnte Schließelement geöffnet wird,
wobei eine Aussparung (78) zwischen dem erwähnten Gleitbereich (6) und einem umlaufenden Teil des Kolbens (47) gebildet wird,
**dadurch gekennzeichnet, dass** die erwähnte Aussparung (78) mittels zumindest einer elastischen Dichtung (69), bereitgestellt um den erwähnten umlaufenden Teil des Kolbens, abgedichtet wird, und dadurch, dass der Schließdämpfer ferner Folgendes umfasst:
- zumindest eine begrenzte Fluidpassage (66) zwischen dem Raum mit hohem Druck und dem Raum mit niedrigem Druck, gebildet durch einen Ventilsitz (9) und ein Ventilglied (67), getrennt durch, bei einer voreingestellten Temperatur, einen vorgegebenen Querschnittsbereich, der eine Schließgeschwindigkeit des Schließelements bestimmt; und
- ein Temperaturausgleichssystem, welches ein erstes Teil umfasst, das den Ventilsitz (9) und das Ventilglied (67) bildet, wobei das erste Teil aus einem ersten Material mit einem ersten thermischen Ausdehnungskoeffizienten hergestellt ist und das Ventilglied (67) aus einem zweiten Material mit einem zweiten thermischen Ausdehnungskoeffizienten hergestellt ist, wobei der zweite thermische Ausdehnungskoeffizient größer ist als der erste thermische Ausdehnungskoeffizient, sodass der erwähnte vorgegebene Querschnittsbereich verkleinert wird, wenn die erwähnte Temperatur erhöht wird und umgekehrt, sodass der erwähnte vorgegebene engste Querschnittsbereich vergrößert wird, wenn die erwähnte Temperatur gesenkt wird.

2. Der Schließdämpfer nach Anspruch 1, **dadurch gekennzeichnet, dass** zumindest ein Teil (17a) des Zylindermantels (17), insbesondere der erwähnte zylindrische Wandabschnitt (5), aus einem glasfaserverstärkten Polymermaterial hergestellt ist.

3. Der Schließdämpfer nach Anspruch 2, **dadurch gekennzeichnet, dass** der erwähnte Gleitbereich (6) durch eine Schicht (17b) bestehend aus Metall oder einem weiteren Polymermaterial gebildet ist, wobei das Metall und das weitere Polymermaterial weniger abrasiv, insbesondere nicht abrasiv, gegenüber der erwähnten elastischen Dichtung (69) sind, als das erwähnte glasfaserverstärkte Polymermaterial gegenüber der erwähnten elastischen Dichtung (69) ist.

4. Der Schließdämpfer nach Anspruch 3, **dadurch gekennzeichnet, dass** das erwähnte weitere Polymermaterial Polyamid, bevorzugt Polyamid 12, enthält.

5. Der Schließdämpfer nach Anspruch 3 oder 4, **dadurch gekennzeichnet, dass** das weitere Polymermaterial frei von Hartfasern ist, die insbesondere eine Mohs-Härte von über 4,0 haben.

6. Ein Schließdämpfer nach irgendeinem der Ansprüche 3 bis 5, **dadurch gekennzeichnet, dass** das weitere Polymermaterial über das erwähnte Teil (17a) des Zylindermantels, welches aus dem erwähnten glasfaserverstärkten Polymermaterial hergestellt ist, übergossen wird.

7. Der Schließdämpfer nach irgendeinem der vorigen Ansprüche, **dadurch gekennzeichnet, dass** sich die erwähnte Dämpferwelle (24) durch den Kolben vom erwähnten Raum mit hohem Druck zum erwähnten Raum mit niedrigem Druck erstreckt und die erwähnte beschränkte Fluidpassage (66) durch eine Bohrung in der erwähnten Dämpferwelle bereitgestellt ist, wobei das Ventilglied (67) innerhalb der erwähnten Bohrung positioniert ist.

8. Der Schließdämpfer nach Anspruch 7, **dadurch gekennzeichnet, dass** die erwähnte Dämpferwelle aus einem Metall, insbesondere einer Aluminiumlegierung, hergestellt ist, welches das erwähnte erste Material ist.

9. Der Schließdämpfer nach Anspruch 7 oder 8, **dadurch gekennzeichnet, dass** das Ventilglied (67) an der erwähnten Dämpferwelle (24) in einem Abstand vom erwähnten Ventilsitz (9) befestigt ist.

10. Der Schließdämpfer nach Anspruch 9, **dadurch gekennzeichnet, dass** das erwähnte Ventilglied und der erwähnte Ventilsitz ein verstellbares Ventil bilden.

11. Der Schließdämpfer nach irgendeinem der Ansprüche 7 bis 10, **dadurch gekennzeichnet, dass** eine weitere Aussparung zwischen der Dämpferwelle (24) und einem inneren Bereich des Kolbens (27) gebildet ist, welcher entlang der Dämpferwelle gleitet, wobei diese weitere Aussparung mittels zumindest einer elastischen Dichtung (68), bereitgestellt auf dem inneren Bereich des Kolbens, abgedichtet ist.

12. Der Schließdämpfer nach irgendeinem der vorigen Ansprüche, **dadurch gekennzeichnet, dass** das erwähnte Ventilglied aus einem Polymermaterial, insbesondere Polyethylen oder Polypropylen, hergestellt ist.

13. Der Schließdämpfer nach irgendeinem der vorigen Ansprüche, **dadurch gekennzeichnet, dass** der Zylindermantel (17) aus einem Polymermaterial hergestellt ist, das mittels Glasfasern verstärkt ist.

14. Der Schließdämpfer nach Anspruch 13, **dadurch gekennzeichnet, dass** der Zylindermantel (17) aus einem Polyamid, bevorzugt Polyamid 6, hergestellt ist, das mittels Glasfasern verstärkt ist.

15. Der Schließdämpfer nach irgendeinem der vorigen Ansprüche, **dadurch gekennzeichnet, dass** zumindest ein Teil des erwähnten Kolbens aus Polyoxymethylen, bevorzugt glasfaserverstärktem Polyoxymethylen, hergestellt ist.

## Revendications

1. Amortisseur pour amortir un mouvement de fermeture d'un système de fermeture ayant un support (2) et un élément de fermeture (3) qui sont connectés de manière articulée l'un à l'autre, l'amortisseur comprenant :
- un corps cylindrique (17) ayant une direction longitudinale (18), ledit corps cylindrique étant fait d'un matériau polymère ;
- une cavité cylindrique fermée formée à l'intérieur du corps cylindrique et remplie d'un volume de fluide hydraulique, la cavité cylindrique étant formée partiellement par une portion de paroi cylindrique (5) du corps cylindrique ;
- un piston (47) à l'intérieur dudit corps cylindrique de manière à diviser la cavité cylindrique fermée en un compartiment haute pression (48) et un compartiment basse pression (49), le piston pouvant coulisser par rapport au corps cylindrique entre deux positions extrêmes dans ladite direction longitudinale, la portion de paroi cylindrique (5) ayant une zone de coulissement intérieure (6) le long de laquelle le piston coulisse lorsqu'il se déplace entre ses deux positions extrêmes ;
- un arbre d'amortisseur (24) qui est monté de manière rotative sur le corps cylindrique et couplé de manière opérationnelle au piston ;
- un mécanisme de conversion de mouvement pour convertir un mouvement de rotation de l'arbre d'amortisseur en un mouvement de coulissement du piston ; et
- une soupape unidirectionnelle (59) permettant l'écoulement du fluide du compartiment basse pression au compartiment haute pression lorsque ledit élément de fermeture est ouvert,
dans lequel un jeu (78) est formé entre ladite zone de coulissement (6) et une partie circonférentielle du piston (47),
**caractérisé en ce que** ledit jeu (78) est rendu étanche au moyen d'au moins un joint élastique (69) prévu autour de ladite partie circonférentielle du piston, et **en ce que** l'amortisseur comprend en outre :
- au moins un passage de fluide restreint (66) entre le compartiment haute pression et le compartiment basse pression qui est formé par un siège de soupape (9) et un élément de soupape (67) séparés par, à une température prédéterminée, une section transversale prédéterminée qui détermine une vitesse de fermeture de l'élément de fermeture ; et
- un système de compensation de température comprenant une première partie qui forme le siège de soupape (9) et l'élément de soupape (67), la première partie étant faite d'un premier matériau ayant un premier coefficient de dilatation thermique et l'élément de soupape (67) étant fait d'un second matériau ayant un second coefficient de dilatation thermique, le second coefficient de dilatation thermique étant plus grand que le premier coefficient de dilatation thermique de sorte que ladite zone de section transversale prédéterminée est diminuée lorsque ladite température est élevée et vice versa de sorte que ladite zone de section transversale la plus étroite prédéterminée est augmentée lorsque ladite température est abaissée.

2. Amortisseur selon la revendication 1, **caractérisé en ce qu'**au moins une partie (17a) du corps cylindrique (17), en particulier ladite portion de paroi cylindrique (5), est constituée d'un matériau polymère renforcé par des fibres de verre.

3. Amortisseur selon la revendication 2, **caractérisé en ce que** ladite zone de coulissement (6) est formée par une couche (17b) faite de métal ou d'un autre matériau polymère, le métal et l'autre matériau polymère étant moins abrasif, en particulier non abrasif, vers ledit joint élastique (69) que ledit matériau polymère renforcé par des fibres de verre ne l'est vers ledit joint élastique (69).

4. Amortisseur selon la revendication 3, **caractérisé en ce que** ledit autre matériau polymère comprend du polyamide, de préférence du polyamide 12.

5. Amortisseur selon la revendication 3 ou 4, **caractérisé en ce que** l'autre matériau polymère est exempt de fibres dures qui ont, en particulier, une dureté Mohs supérieure à 4,0.

6. Amortisseur selon l'une quelconque des revendications 3 à 5, **caractérisé en ce que** l'autre matériau polymère est surmoulé sur ladite partie (17a) du corps cylindrique qui est constituée dudit matériau polymère renforcé par des fibres de verre.

7. Amortisseur selon l'une quelconque des revendications précédentes, **caractérisé en ce que** ledit arbre d'amortisseur (24) s'étend à travers le piston depuis ledit compartiment haute pression vers ledit compartiment basse pression et ledit passage de fluide restreint (66) est fourni par un alésage dans ledit arbre d'amortisseur, l'élément de soupape (67) étant positionné dans ledit alésage.

8. Amortisseur selon la revendication 7, **caractérisé en ce que** ledit arbre d'amortisseur est fait d'un métal, en particulier un alliage d'aluminium, qui est ledit premier matériau.

9. Amortisseur selon la revendication 7 ou 8, **caractérisé en ce que** l'élément de soupape (67) est fixé audit arbre d'amortisseur (24) à une distance dudit siège de soupape (9).

10. Amortisseur selon la revendication 9, **caractérisé en ce que** ledit élément de soupape et ledit siège de soupape forment une soupape réglable.

11. Amortisseur selon l'une quelconque des revendications 7 à 10, **caractérisé en ce qu'**un autre jeu est formé entre l'arbre d'amortisseur (24) et une zone intérieure du piston (27) qui coulisse le long de l'arbre d'amortisseur, lequel autre jeu est rendu étanche au moyen d'au moins un joint élastique (68) prévu sur la zone intérieure du piston.

12. Amortisseur selon l'une quelconque des revendications précédentes, **caractérisé en ce que** ledit élément de soupape est réalisé en un matériau polymère, notamment en polyéthylène ou en polypropylène.

13. Amortisseur selon l'une quelconque des revendications précédentes, **caractérisé en ce que** le corps cylindrique (17) est réalisé en un matériau polymère renforcé au moyen de fibres de verre.

14. Amortisseur selon la revendication 13, **caractérisé en ce que** le corps cylindrique (17) est réalisé en polyamide, de préférence en polyamide 6, renforcé au moyen de fibres de verre.

15. Amortisseur selon l'une quelconque des revendications précédentes, **caractérisé en ce qu'**au moins une partie dudit piston est réalisée en polyoxyméthylène, de préférence en polyoxyméthylène renforcé par des fibres de verre.
